# EUROPEAN PATENT SPECIFICATION

(11) **EP 1 714 559 B1**
(45) Date of publication and mention of the grant of the patent: **06.06.2007**
(21) Application number: 05075917.4
(22) Date of filing: 19.04.2005
(51) Int. Cl.: A23G 1/20, A23G 3/02

(54) **Apparatus for making chocolate articles on a conveyor web**
Vorrichtung zur Herstellung von Schokoladeartikeln auf einem Fördergeflecht
Dispositif pour produire des denrées en chocolat sur un convoyeur à bande

(43) Date of publication of application: 25.10.2006
(73) Proprietor: AASTED-MIKROVERK APS, 3520 Farum (DK)
(72) Inventor: Refer, Jacob Christian, 3000 Helsingør (DK)
(74) Representative: Heiden, Finn

(56) References cited:
- EP-A- 0 152 059
- EP-A- 0 827 696
- EP-A- 1 356 738
- GB-A- 2 070 501
- US-A- 3 536 111

## Description

The present invention concerns the making of edible articles by immersing cold plungers into chocolate-like mass deposited directly onto a conveyor web.

The apparatus according to the present invention comprises a support for at least one cold-pressing plunger with pressing surfaces, and that the apparatus carries a lower closure part being movable up- and down in relation to the web and adapted to rest on the conveyor web during pressing of the mass and having a central guidance channel for the at least one plunger.

Cold-pressing of chocolate-like mass and chocolate directly on a conveyor web is a relatively new technical field, which is for example described in EP1356738A1.

Among the greatest challenges in this field is the positioning of the deposited mass on the web conveyor, so that the pressing action of the plungers provides the best possible result without residual waste on the web, and creating a fully shaped article.

Another challenge is to get control over the mass laying on the conveyor web in the period after depositing and before the plungers presses it into shape. Until now only high-viscous mass has been possible to apply. Low-viscous or liquid mass simply spreads on the conveyor before it is captured by the pressing tools.

Generally, chocolate-like masses are suspensions of non-fat particles such as sugar, milk powders and cocoa solids mixed up with a liquid fat constituent. Often the fat phase comprises genuine cocoa butter of until around 30%, but may comprise substitutes as well. Such substitutes can be in the form of other types of fat-containing oils. Chocolate types where the cocoa butter has been replaced wholly or partly by other fats are often named commercially as compound chocolate, in which the cocoa butter has been replaced by palm-kemel oil. Mass made of 100% fat in the form of cocoa butter or the like as compound is also possible.

However, for the chocolate-like mass according to the present invention it is decisive, that whether the fat phase constitutes of genuine cocoa butter or substitutes therefore, that the fat phase is capable of crystallizing into stable crystal types, such as the β crystals developing in genuine cocoa butter when the mass solidifies.

The chocolate-like mass is brought to a tempered, liquid state and then deposited directly onto a conveyor web. Optionally, the conveyor web may then be shaken for obtaining a more even distribution of the chocolate mass.

When the mass is chocolate mass having a content of genuine cocoa mass it is tempered. By the tempering process the mass is brought to around 40-50°C, where after it is being cooled to around 25-34°C so that crystallisation is initiated. Then the mass is reheated around 0,5-2.0°C for re-melting most of the in-stable crystals in the mass, however preserving a content of stable β-crystals which melts at a higher temperature than the in-stable crystals. The stable crystals are preserved in the mass ready for depositing in an amount of typically 0,01% - 5%, preferably in an amount of 0.1% - 2%. The stable crystals could preferably be of the βV or βIV type.

After the edible articles made are solidified, they could be filled with a centre mass of a creamy or liquid food material, which differs from that of the article material. The centre mass could be an alcohol containing mass, a sugar containing mass or a creamy fondant mass, simply any of the centre masses known to the chocolate industry. Finally, a chocolate covering layer may be deposited for closing the centre mass off thereby creating a kind of "praline-like" article if the edible article made by the invention is flat or plate-shaped such as a tablet, a centre in the form of a biscuit could be arranged as well.

Such general techniques of cold-pressing chocolate-like mass directly on a conveyor web are described in EP135674BA1, EP1356739Al, EP1356740A1 and EP 1356741 A1.

WO 98/30111 (Mars) also discloses embossing of details on top of enrobed products. A pre-made centre is made by extruding mass and cutting into desired length. The bar-shaped centre is then arranged on a supporting surface and enrobed with chocolate mass before embossing. The disclosure is silent about depositing chocolate directly on a conveyor web before embossing as the disclosure exclusively deals with enrobed products. The disclosure is also silent about any means for the depositing of the mass.

However, the prior art is silent about how to position the depositing of mass lumps on the conveyor web so that the plungers thereafter precisely encompass and presses the mass lumps up to well-defined chocolate pieces without any residual waste on the conveyor. By the prior art as described in EP1356748A1, EP1356739A1, EP1356740A1 and EP1356741A1 the mass lumps are deposited on the conveyor web with a mutual distance where after the conveyor moves on to the pressing operation. Then, with the prior solutions, there must be no off positioning when the cold-pressing plungers comes to engagement with the lumps and presses them up to shape. Otherwise the residual chocolate will be pressed aside from the tools and create chocolate waste on the web and incomplete articles. Then with these prior known methods only high-viscous mass is applicable - otherwise the mass will simply run uncontrolled out on the conveyor web before being captured by the pressing tools.

Also the prior art gives no indications of how to handle the depositing of low viscous mass or liquid mass, so that it remains safely encompassed by the pressing tools. Neither does the prior art give solutions of how to make articles with more than one type of mass in the same article.

The inventive solution is characterised in, that a mass depositing device is fixed to the support of the apparatus and comprises a nozzle part with an opening for depositing of the mass, which part is adapted to move into the line of movement of the cold-pressing plungers, deposit a lump of mass at the web and thereafter retract again before the next pressing operation.

Hereby is obtained, that both depositing and pressing of the articles into shape is achieved in the same mutual position of the apparatus and the conveyor web. No dislocation nor off-set in relation to the desirable line of attack of the plunger to the deposited lump occurs. The apparatus remains in position during depositing as well as during succeeding pressing into shape of the articles.

The process is that the conveyor web is stopped and the nozzle part with the opening for the depositing of the mass moves into the line of movement of the at least one cold-pressing plunger, a lump of mass is deposited at the web and the nozzle part retracts again. Then, the cold-pressing plunger moves down and presses the mass Into shape and moves up again so that the conveyor is free to move further on to the next depositing position.

According to a further embodiment of the invention the guidance channel for the at least one cold-pressing plunger could also comprise an opening in the side adapted for the passage of the nozzle part into the inner of the guidance channel, and that the at least one cold-pressing plunger is adapted to be moved up to a position in which the pressing surfaces is above the opening in the side of the channel adapted for the passage of the nozzle part.

Hereby is obtained, that the mass is surrounded by the lower closure part already when being deposited. Then, when the mass hits the conveyor web, it is restricted to move outside the bordering made by the closure part. Then highly liquid masses may also be pressed into shape. Highly liquid mass types that would otherwise be impossible to restrict to the very small pressing area on the conveyor web. The so-called one-shot and triple-shot principles may then also be used for depositing mass. This really opens up for new possibilities of creating desirable articles comprising more than one mass type for the market. This is a great advantage when two or three different types of mass are to be used for the making of the articles, For example with the one-shot depositing principle a great drop of mass having an outer totally surrounding layer of one mass type and an inner centre of another mass type is deposited into the inner of the lower closure part before the pressing operation.

During the pressing operation the pressing surfaces maintain temperatures below the solidification temperature of the mass being pressed into shape.

Thereafter the plungers are retracted from the edible articles then being stable in their shape. So necessary for the plungers to be capable of being retracted from the chocolate without deforming the contacted surfaces of the articles is, that the outer part or surface "skin" of the chocolate layer has solidified and thereby contracted slightly. The pressing surfaces are high gloss surfaces, which are then transferred to the surfaces of the articles that then becomes glossy and shiny as well.

When being deformed by the pressing surfaces of the plungers the ready-made surfaces of the chocolate articles are simply an identical print of the geometry of the plunger pressing surfaces.

The chocolate rapidly solidifies under crystallisation from its surface in contact with the pressing surfaces of the plunger and the lower closure part and inwardly through the chocolate layer. By being forced into contact with the colder pressing surfaces of the plunger, the tempered chocolate solidifies and contracts slightly at its part in contact with the pressing surfaces whereby it releases. Decisive is here, that the tempered chocolate contains stable crystals, which makes the chocolate mass contract just slightly when it solidifies in contact with a continuously cooled surface. A solidified outer "skin" is created on the chocolate in contact with the pressing surfaces when the chocolate solidifies and contracts slightly, and this is sufficient for the chocolate to release from the plunger surface where after the plunger can be retracted. The pressing surfaces are high gloss surfaces so that diminishing friction is created with the chocolate mass when it contracts slightly during contraction. The remaining or inner part of the chocolate layer then doesn't need to be solidified when the plunger is retracted from its contact with the chocolate. The solidified "skin" of the chocolate layer secures a geometrical stable geometry of the article though heat remains inside the chocolate mass when the plunger is retracted from contact.

When the plungers are retracted before the articles have solidified completely, the chill forced from the inside does not reach all the way through the layer before the plungers are retracted. Though the bottoms of the articles in contact with the conveyor web have solidified slightly in the outer "skin" simultaneously with the forced solidification from the pressing surfaces of the articles in contact with the plungers, heat still remains in the inside of the articles when the plungers are retracted. The inner of the chocolate articles are more or less "leather-like" when the plungers are retracted.

However, care should be taken so that the chill is limited and so that it is secured, that the rapid cooling from the pressing surfaces doesn't reach all the way through the articles whatever the thickness thereof may be. If it does it may create cracks in the chocolate, especially at "sharp" corners, etc. or at parts where the thickness varies. The combination of the temperature of the pressing surfaces and the immersion time thereof in contact with the chocolate determines the actual amount of chill taken up by the chocolate mass. Obviously, the immersion time has to be reduced when the article thickness is smaller when keeping the temperature of the pressing surfaces essentially constant.

The invention is explained further below by reference to preferred embodiments as well as the drawing, in which
fig. 1 is a schematical, perspective view of a production line comprising the apparatus according to the invention,
fig. 2 is a schematical, sectional view of the part of the apparatus according to the invention comprising the support with the cold-pressing plungers and the mass depositing device,
fig. 3 is a schematical, sectional view of the part of the apparatus according to the invention comprising the support with one of the cold-pressing plungers and the nozzle part of the depositing device, shown in a retracted position,
fig. 4 is the same as in figure 3, shown in an advanced position,
fig. 5 is the same as in figure 4 with chocolate mass deposited on the conveyor web,
fig. 6 is the same as in fig. 5, with even more chocolate mass deposited onto the conveyor web,
fig. 7 is the same as in figures 5 and 6, with the nozzle part in the retracted position,
fig. 8 is the same as in figure 7, now with the plunger having been pressed down to complete cold-pressing of the mass into shape,
fig. 9 is the same as in figure 8, now with the plungers raised again and a fully shaped article on the conveyor web, and
fig. 10 is the same in a position after a one-shot article has been pressed.

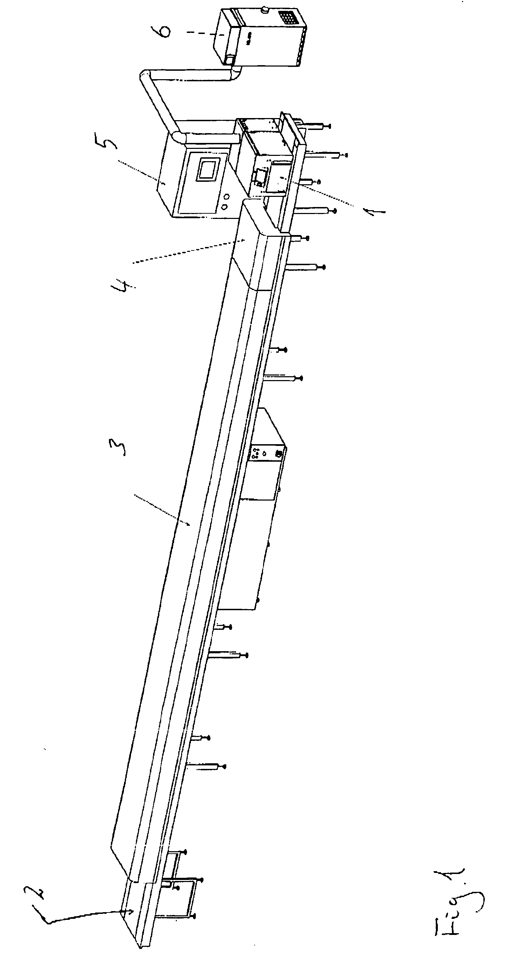

The apparatus 1 according to the invention is disclosed schematically in figure 1 arranged for the making of articles from chocolate mass on a conveyor web 2. The conveyor web runs through a cooling tunnel 3 with an entrance section 4. The conveyor web 2 could be made of a plastic material or of a steel material.

The conveyor belt or web 2 runs through the complete cooling tunnel 3 by a known "closed" or "endless" conveyor principle and is typically driven by running around driving rolls at the ends of the line.

A cooling unit 5 is arranged for providing the apparatus 1 with cooled air or cooled liquid circulating through parts of the apparatus for achieving cold temperatures of the plungers. A dehumidifier 6 is arranged for providing the apparatus 1 with dry air so that dew is avoided in the apparatus 1.

The apparatus 1 comprises a support 7 for at least one cold-pressing plunger 8 with pressing surfaces 9. The apparatus also carries a lower closure part 10 being movable up-and down in relation to the web 2. The support 7 is typically arranged so in the apparatus that it can move up and down towards the web from an upper position where the closure part 10 is high from the web and to a lower position where the lower closure part 10 rests on the web 2.

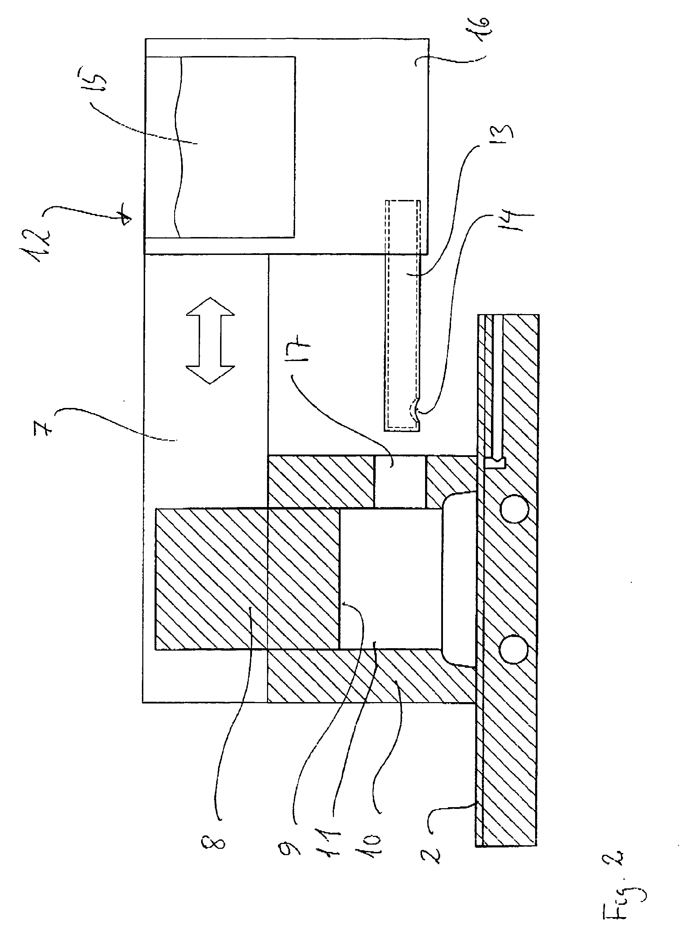

The lower closure part has a central guidance channel 11 for each plunger 8. The disclosure in the figures 2-10 is simple and schematic as a great variety of known control and connection means can be applied for the lifting and lowering movements of the support 7 as well as for the movements of the plungers 8. It could be hydraulic or pneumatic cylinders, servomotors or mechanical engaging toothed wheels all controlled by a PLC or computer or other control means.

The apparatus also comprises a mass depositing device 12 fixed to the support 7, which is also schematically disclosed in figure 2. The depositing device 12 comprises a nozzle part 13 with an opening 14 for depositing of the mass 15, which could be contained in a hopper 16 as disclosed in figure 2 or in a decentralized arranged reservoir.

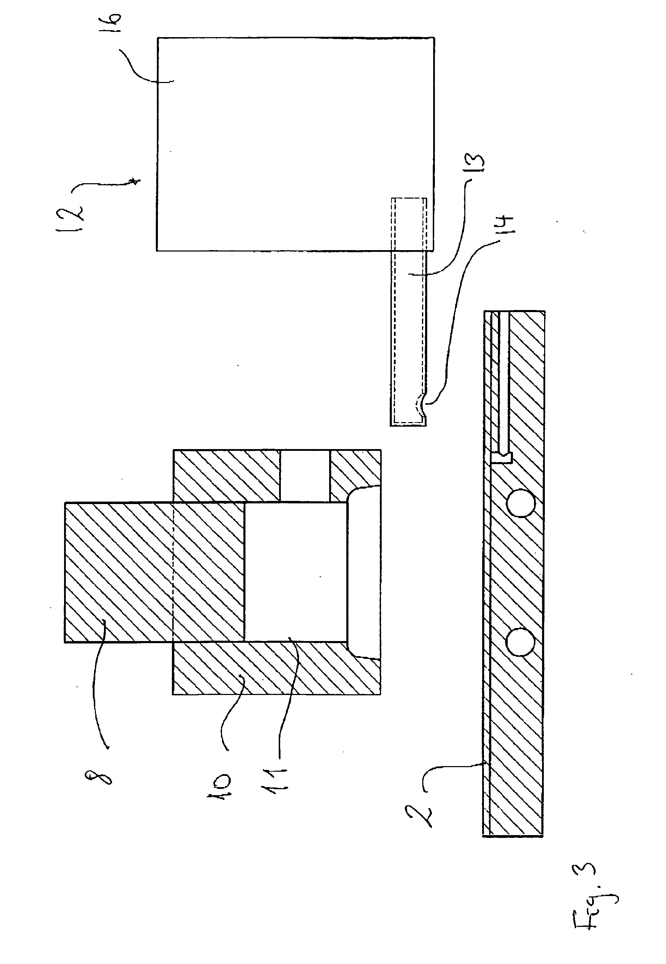

In figure 3 - 10 the mutual positions between the lower closure part 10 with the plunger 8 and the depositing device 12 are shown schematically without any connection means for providing best possible clarity.

In figure 3 the lower closure part 10 is shown in the upper position and the depositing device 12 is shown in the retracted position.

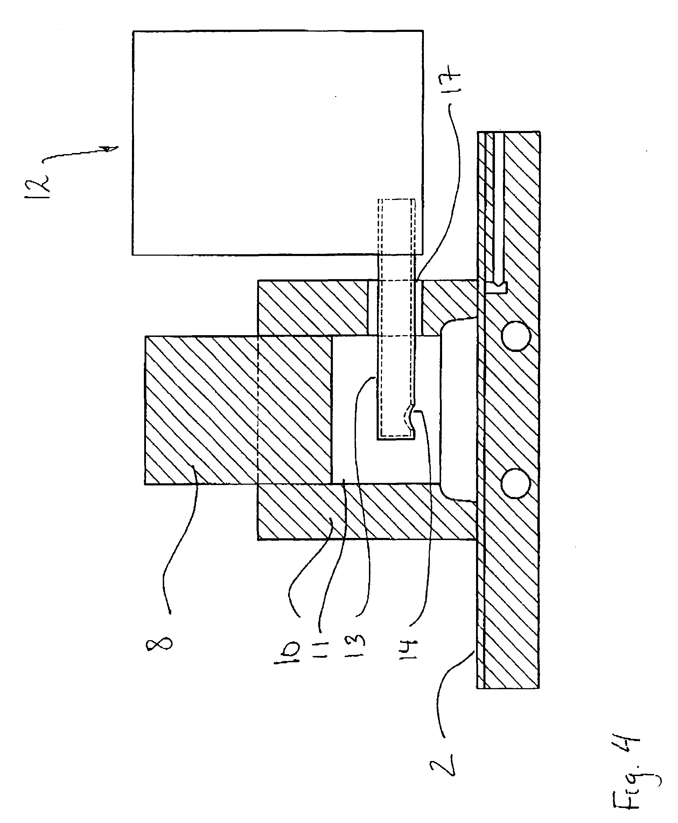

In figure 4 the lower closure part 10 is lowered to rest upon the plastic web 2 and the depositing device 12 is moved into an advanced position in which the nozzle part 13 is moved into the line of movement of the cold-pressing plunger 8. Thereby is achieved, that the mutual positions are kept between the pressing tools and the depositing operation.

In the side of the guidance channel 11, i.e. in the lower closure part 10 is arranged an opening 17 for the passage of the nozzle part 13 into the inner channel 11 as disclosed in figure 4. In the disclosed position of the nozzle part 13, the plunger 8 is moved up to a position in which the pressing surfaces 9 is above the opening 17 in the side of the channel 11.

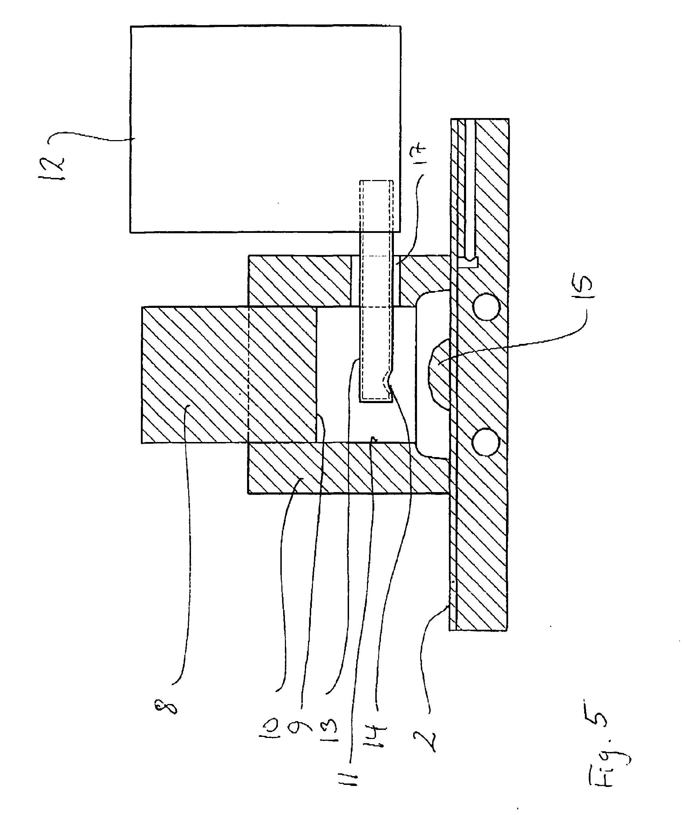

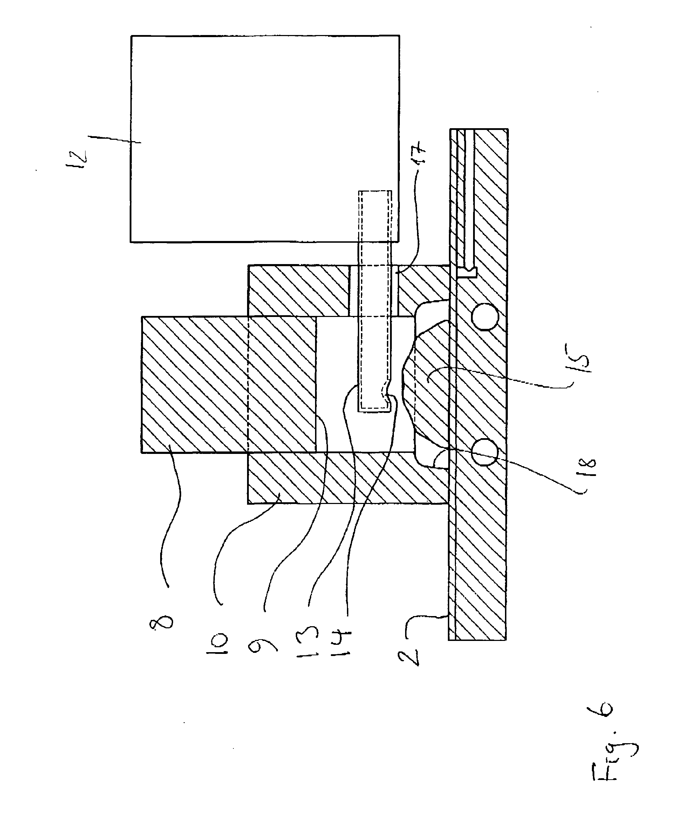

In figure 5 the same positions is disclosed as in figure 4, however now is also disclosed that an amount of mass 15 is deposited through the opening 14 in the nozzle part 13. In figure 6 the mutual positions is still kept and a greater amount of mass has been deposited on the web. It still clearly disclosed how the inner surfaces 18 of the lower closure part 10 encompasses and surrounds the mass 15 having been deposited onto the web 2. Then the mass could be of any viscosity and even comprise ingredients. The possibility of that liquid mass runs out on the web before being surrounded by the pressing tools is completely eliminated.

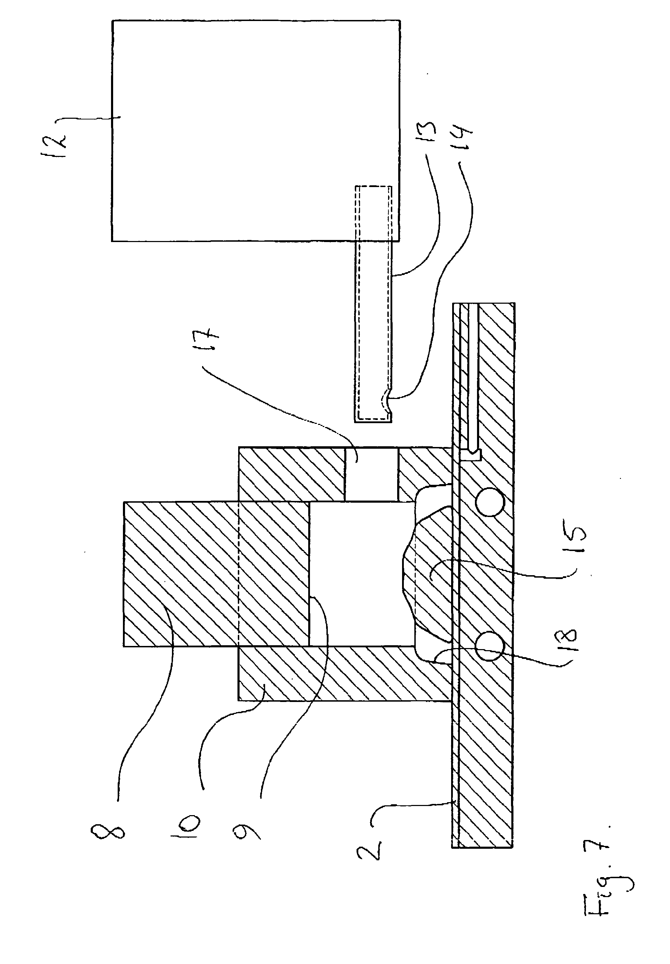

In figure 7 the depositing device 12 has been retracted to the off-line position and the nozzle part 13 is removed from the opening 17. The pressing of the mass into shape can now be performed.

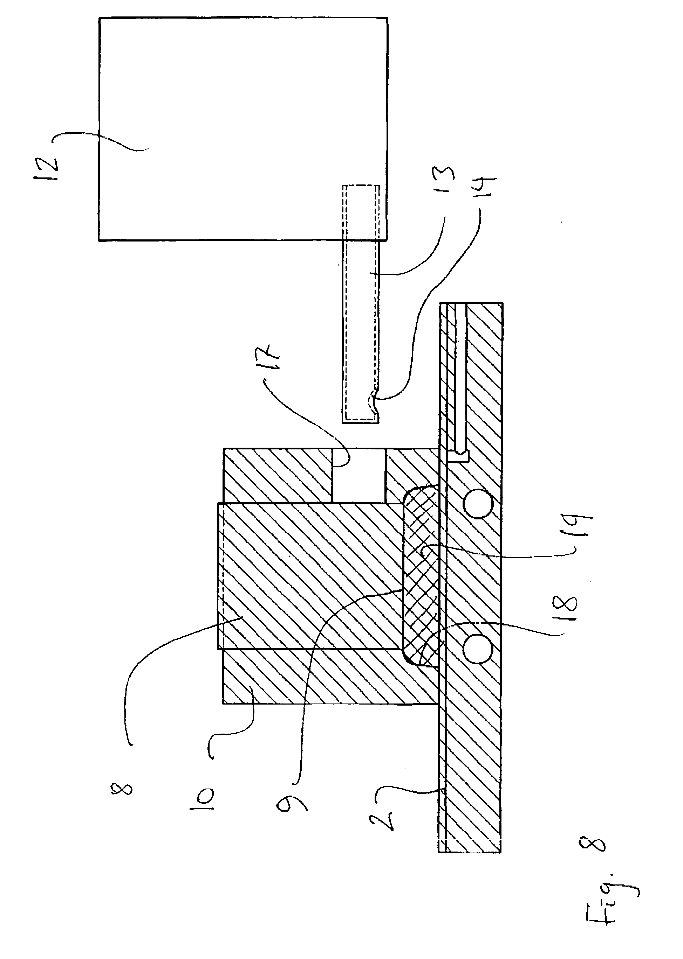

In figure 8 is disclosed that the pressing operation is finished as the plunger 8 has pressed the mass out to full engagement with the surfaces 18 of the lower closure part 10, so that the article 19 is completely shaped and finished.

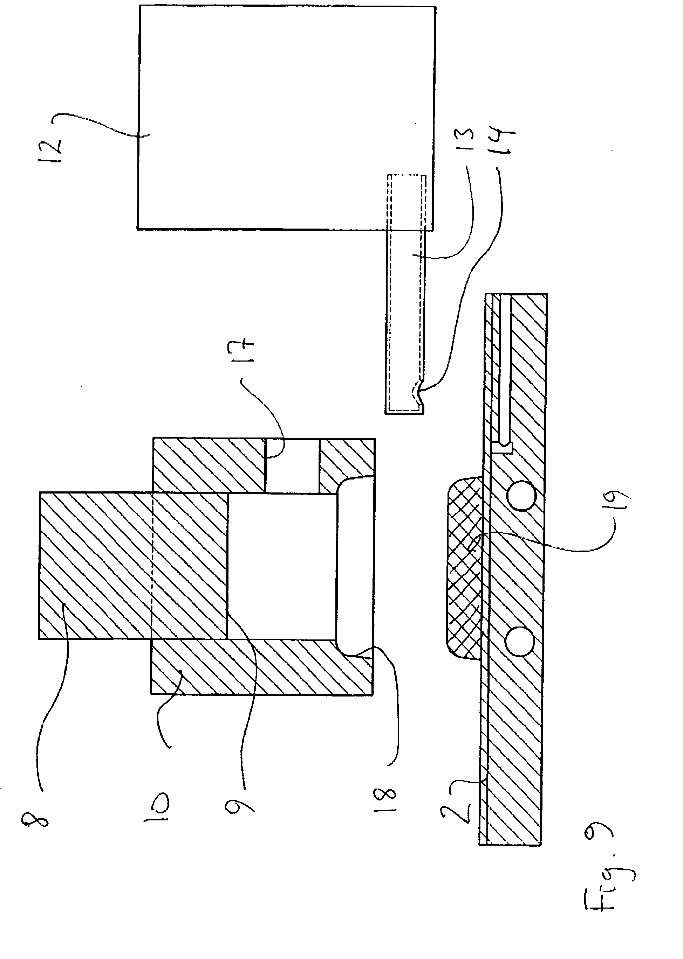

In figure 9 the lower closure part 10 is lifted up to the upper position and the forming surfaces 18 has fully left the article 19. The conveyor web 2 moves the row of articles on to the left, so that the process can start over again beginning with the position as depicted in figure 3.

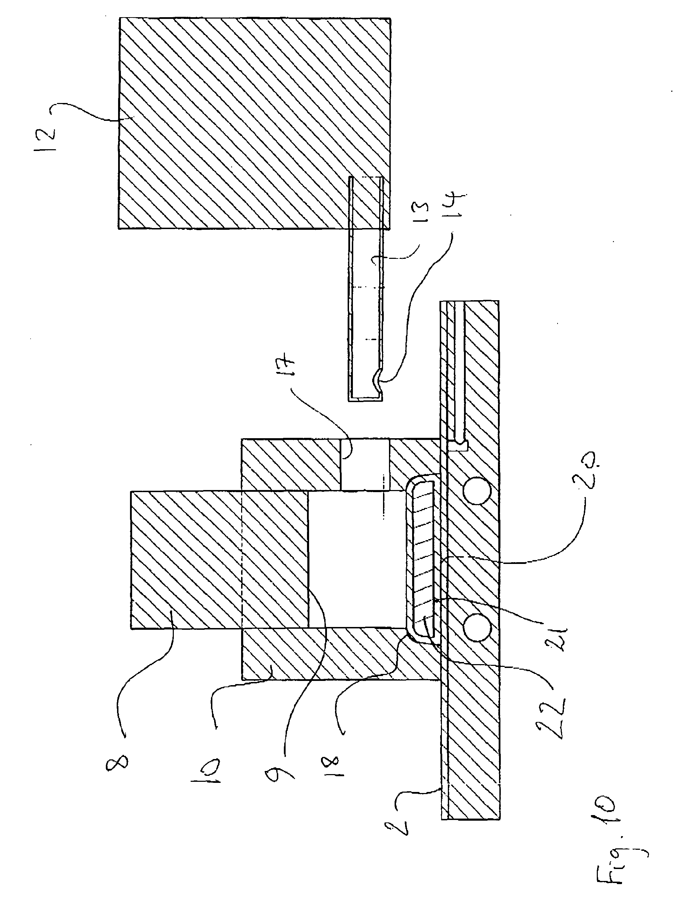

In figure 10 is disclosed how an article is made with a one-shot depositing process. A drop of mass having an outer layer 21 of on type of mass and an inner centre 22 of another type of mass was deposited on to the web 2, where after the pressing operation took place as in the previous figures. The great advantage is, that during depositing the two layer mass is safety surrounded by the forming surfaces 18 of the lower closure part 10. Also when the mass is highly liquid. After depositing the pressing operation takes place in a fast manner without any intermediary positioning.

## Claims

1. Apparatus (1) for making edible articles by cold-pressing chocolate-like mass, in particular chocolate mass, being deposited directly on a conveyor web (2), comprising a support (7) for at least one cold-pressing plunger (8) with pressing surfaces (9),
in which the apparatus carries a lower closure part (10) being movable up- and down in relation to the web and adapted to rest on the conveyor web (2) during pressing of the mass and having a central guidance channel (11) for the at least one plunger (8),
**characterised in,**
**that** a mass depositing device (12) is fixed to the support (7) of the apparatus and comprises a nozzle part (13) with an opening (14) for depositing of the mass, which part is adapted to move into the line of movement of the cold-pressing plunger, deposit a lump of mass (15) at the web (2) and thereafter retract again before the next pressing operation.

2. Apparatus according to claim 1, **characterised in, that** the guidance channel (11) for the at least one cold-pressing plunger (8) comprises an opening (17) in the side adapted for the passage of the nozzle part (13) into the inner of the guidance channel (11), and that the at least one cold-pressing plunger (8) is adapted to be moved up to a position in which the pressing surfaces (9) are above the opening (17) in the side of the channel, which opening is adapted for the passage of the nozzle part (13).

## Patentansprüche

1. Vorrichtung (1) zur Herstellung essbarer Waren durch Kaltpressen von schokoladenähnlicher Masse, insbesondere von Schokoladenmasse, die unmittelbar auf einem Transportband (2) abgesetzt wird, umfassend eine Halterung (7) für wenigstens einen Kaltpresstauchkolben (8) mit Pressoberflächen (9), wobei die Vorrichtung ein unteres Verschlussteil (10) trägt, das nach oben und unten relativ zum Band bewegbar ist und das ausgelegt ist, während des Pressens der Masse auf dem Transportband (2) aufzuliegen, und das einen zentralen Führungskanal (11) für den wenigstens einen Tauchkolben (8) aufweist,
**dadurch gekennzeichnet, dass**
eine Massenabsetzeinrichtung (12) an der Halterung (7) der Vorrichtung befestigt ist und ein Düsenteil (13) mit einer Öffnung (14) zum Absetzen der Masse umfasst, wobei das Teil so ausgelegt ist, dass es sich in die Bewegungslinie des Kaltpresstauchkolbens bewegt, einen Klumpen der Masse (15) an dem Band (2) absetzt und sich danach und vor dem nächsten Pressvorgang wieder zurückzieht.

2. Vorrichtung gemäß Anspruch 1, **dadurch gekennzeichnet, dass** der Führungskanal (11) für den wenigstens einen Kaltpresstauchkolben (8) eine Öffnung (17) in der Seite umfasst, die für den Durchgang des Düsenteils (13) in das Innere des Führungskanals (11) ausgelegt ist, und dass der wenigstens eine Kaltpresstauchkolben (8) so ausgelegt ist, dass er nach oben in eine Stellung zu bewegen ist, in welcher sich die Pressoberflächen (9) über der Öffnung (17) in der Seite des Kanals befinden, wobei die Öffnung für den Durchgang des Düsenteils (13) ausgelegt ist.

## Revendications

1. Dispositif (1) pour la production des articles comestibles par pressage à froid de la masse du type chocolat, en particulier de la masse de chocolat, étant coulée directement sur une bande convoyeur (2), comprenant un support (7) pour au moins un plongeur de pressage à froid (8) avec des surfaces de pression (9),
quel dispositif tient une partie de fermeture inférieure (10) étant mobile en haut et en bas par rapport à la bande et adaptée à reposer sur la bande convoyeur (2) pendant le pressage de la masse et ayant un canal de guidage central (11) pour au moins un plongeur (8),
**caractérisé en ce**
**qu'**un dispositif de coulée de masse (12) est fixé au support (7) du dispositif et comprend une pièce de buse (13) avec un orifice (14) pour la coulée de la masse, quelle pièce est adaptée à mouvoir dans la ligne de mouvement du plongeur de pressage à froid, à couler une motte de masse (15) sur la bande (2) et après cela à se retirer avant la prochaine opération de pression.

2. Dispositif selon la revendication 1, **caractérisé en ce que** le canal de guidage (11) pour au moins un plongeur de pressage à froid (8) comprend un orifice (17) latéral adapté pour le passage de la pièce de buse (13) jusqu'à l'intérieur du canal de guidage (11), et qu'au moins un plongeur de pressage à froid (8) est adapté à être mouvé en haut jusqu'à une position dans laquelle les surfaces de pression (9) sont au-dessus de l'orifice (17) sur le côté du canal, quel orifice est adapté pour le passage de la pièce de buse (13).
